# EUROPÄISCHE PATENTSCHRIFT

(11) **EP 0 734 550 B1**
(45) Veröffentlichungstag und Bekanntmachung des Hinweises auf die Patenterteilung: **03.06.1998**
(21) Anmeldenummer: 95902046.2
(22) Anmeldetag: 05.12.1994
(51) Int. Cl.: G05B 19/042, F23N 5/24

(54) **VORRICHTUNG ZUM ÜBERWACHEN WENIGSTENS EINER SICHERHEITSRELEVANTEN FUNKTION EINES GERÄTES**
DEVICE FOR MONITORING AT LEAST ONE SAFETY-RELEVANT FUNCTION OF AN APPARATUS
DISPOSITIF DE SURVEILLANCE D'AU MOINS UNE FONCTION RELATIVE A LA SECURITE D'UN APPAREIL

(30) Priorität: 16.12.1993 DE 4342903
(43) Veröffentlichungstag der Anmeldung: 02.10.1996
(73) Patentinhaber: ROBERT BOSCH GMBH, 70442 Stuttgart (DE)
(72) Erfinder: KRIEGER, Klaus, D-73249 Wernau (DE); KÖNIG, Markus, D-73033 Göppingen (DE); BÖTTIGHEIMER, Andreas, D-72639 Neuffen (DE); SCHMIDT, Jürgen, D-73614 Schorndorf (DE)
(86) Internationale Anmeldenummer: DE9401438
(87) Internationale Veröffentlichungsnummer: WO9516944

(56) Entgegenhaltungen:
- EP-A- 0 186 612
- EP-A- 0 496 509
- EP-A- 0 566 177
- DE-A- 3 923 773
- DE-A- 4 132 100
- GB-A- 2 255 422
- PATENT ABSTRACTS OF JAPAN vol. 013 no. 449 (M-878) ,9.Oktober 1989 & JP,A,01 174850 (DAIKIN IND LTD) 11.Juli 1989,

## Beschreibung

### Stand der Technik

Die Erfindung geht aus von einer Vorrichtung zum Überwachen wenigstens einer sicherheitsrelevanten Funktion eines Gerätes nach der Gattung des unabhängigen Anspruchs. Aus der JP-A 01-174850 (Patent Abstracts of Japan), VOL.013, NO.449 (M-878), 09.10.1989 ist eine Steuervorrichtung einer Klimaanlage bekannt, die motorisch verstellbare Klappen sowie einen Kompressor enthält. Die Steuervorrichtung enthält einen elektrisch lösch- und beschreibbaren Speicher (EEPROM), in den ein Mikroprozessor bei einem festgestellten Fehler die zum Zeitpunkt des Auftretens des Fehlers vorherrschenden Betriebsbedingungen hinterlegt. Ein Servicetechniker kann die Daten auslesen.

Aus der DE-A 39 23 773 ist eine Vorrichtung bekannt, die auf eine Steuerung und Überwachung eines brennstoffbeheizten Gerätes abgestellt ist. Vorgesehen sind zwei Mikrocomputersysteme, die über einen Datenbus miteinander verbunden sind. Diejenigen Eingangssignale, welche die sicherheitsrelevanten Funktionen des Gerätes wiedergeben, werden in beide Mikrocomputersysteme eingegeben. Beide Systeme berechnen die entsprechenden Stellsignale für beispielsweise Magnetventile, wobei ein Ausgangssignal nur dann an eine Endstufe weitergeleitet wird, wenn die Stellbefehle beider Systeme identisch sind. Jedes Mikrocomputersystem hat die Möglichkeit, über eine gemeinsame Sicherheitsabschaltung alle Endstufen stromlos zu schalten und damit das brennstoffbeheizte Gerät in einen sicheren Zustand zu überführen.

Aus der EP-A 496 509 ist eine Vorrichtung bekannt, die Mikroprozessoren enthält, wobei jedem Mikroprozessor ein Speicher zugeordnet ist. Die einzelnen Speicher können von den Mikroprozessoren beschrieben werden. Ein Auslesen des Speicherinhalts durch die Mikroprozessoren ist dagegen nicht vorgesehen. Das Auslesen der in den Speichern hinterlegten Information sowie ein gegebenenfalls weiteres Einspeichern von Daten übernimmt dagegeben ein weiterer Mikroprozessor. Die einzelnen Mikroprozessoren geben laufend Daten an die Speicher weiter, welche den gerade vorliegenden Betriebszustand der zu steuernden Einrichtung widerspiegeln. Eine Ermittlung eines Fehlers ist in den Mikroprozessoren selbst nicht vorgesehen, damit die Informationsverarbeitungsgeschwindigkeit nicht beeinträchtigt wird. Diese Aufgabe übernimmt der weitere Mikroprozessor, der durch Vergleichsoperationen oder sonstige Signalverarbeitungen feststellt, ob ein Fehler aufgetreten ist.

Weiterhin ist aus der EP-A 566 177 eine Steuerung eines brennstoffbeheizten Gerätes bekannt, die einen Mikroprozessor enthält, dem ein eigener, nichtflüchtiger Speicher zugeordnet ist, der vom Mikroprozessor beschreib- und auslesbar ist. Der Mikroprozessor legt festgestellte Fehler im Speicher ab. Ein Abschalten des brennstoffbeheizten Gerätes ist nicht vorgesehen. Die im Speicher hinterlegten Daten werden so lange aufbewahrt, bis ein Servicetechniker den Speicherinhalt ausliest.

Der Erfindung liegt die Aufgabe zugrunde, eine Vorrichtung zum Überwachen wenigstens einer sicherheitsrelevanten Funktion eines Gerätes anzugeben, die eine hohe Betriebssicherheit aufweist. Die Aufgabe wird durch die im unabhängigen Anspruch angegebenen Merkmale gelöst.

### Vorteile der Erfindung

Erfindungsgemäß ist vorgesehen, daß jedem der vorhandenen Mikroprozessoren, die unabhängig voneinander eine Fehlerdetektion durchführen, ein eigener beschreib- und löschbarer Speicher, im folgenden EEPROM genannt, zugeordnet ist. Die Sicherheit wird erhöht durch eine weitgehende Trennung der jeweils einen Mikroprozessor enthaltenden Überwachungskanäle. Die Mikroprozessoren sind nur noch über einen gemeinsamen Datenbus miteinander verbunden, der insbesondere einen Datenaustausch zum Vergleich eines festgestellten Fehlers ermöglicht. Jeder Mikroprozessor kann ermittelte Fehler im Speicher hinterlegen und die dort hinterlegte Information auslesen. Bei einem aufgetretenen Fehler ist eine Abschaltung des Gerätes vorgesehen, die nur durch eine manuelle Betätigung eines Schalters zur erneuten Inbetriebnahme des Gerätes aufgehoben werden kann.

Mit diesen Maßnahmen ist eine hohe Betriebssicherheit des zu überwachenden Gerätes möglich.

Vorteilhafte Weiterbildungen und Ausgestaltungen der erfindungsgemäßen Vorrichtung ergeben sich aus abhängigen Ansprüchen. Eine besonders vorteilhafte Ausgestaltung sieht vor, daß als beschreib- und löschbarer Speicher ein EEPROM vorgesehen ist.

Eine andere vorteilhafte Ausgestaltung sieht einen Vergleich der Inhalte der EEPROM's vor, wobei die Abschaltung bei einer Übereinstimmung von eingetragenen Fehlern vorgenommen wird. Stimmen die Speicherinhalte nicht überein, so kann ein zufälliger Fehler aufgetreten sein, der beispielsweise von einer elektromagnetischen Störung verursacht wurde. Das Gerät kann dann in Betrieb bleiben.

Eine vorteilhafte Weiterbildung sieht vor, daß jeder Mikroprozessor eine separate Funktion steuert, wobei die Funktionen zur Inbetriebnahme oder zum Betreiben des Gerätes eine UND-Bedingung erfüllen müssen. Mit dieser Maßnahme ist eine weitere Erhöhung der Betriebssicherheit möglich.

Die erfindungsgemäße Vorrichtung ist insbesondere geeignet zur Verwendung bei Geräten, die hohe Sicherheitsanforderungen sowie gleichzeitig eine hohe Verfügbarkeit aufweisen sollten. Eine erste vorteilhafte Verwendung ist bei einem brennstoffbeheizten Gerät gegeben, bei dem insbesondere eine hohe Sicherheit im Vordergrund steht. Eine andere vorteilhafte Verwendung ist bei Steuergeräten gegeben, die in einem Kraftfahrzeug eingebaut sind. Neben einer hohen Sicherheitsanforderung wird bei dieser Verwendung zusätzlich eine hohe Verfügbarkeit gefordert, um sicherzustellen, daß zumindest noch die nächste Kraftfahrzeugwerkstatt angefahren werden kann. Zufällige Störungen, beispielsweise elektromagnetische Störungen, gelangen bei einem brennstoffbeheizten Gerät insbesondere über einen Energieversorgungsanschluß in das Gerät während die in Kraftfahrzeugen eingebauten Steuergeräten insbesondere hochfrequenten elektromagnetischen Störungen ausgesetzt, die sowohl außerhalb des Fahrzeugs als auch im Fahrzeug selbst auftreten können.

Weitere vorteilhafte Weiterbildungen und Ausgestaltungen der erfindungsgemäßen Vorrichtung ergeben sich aus weiteren Unteransprüchen in Verbindung mit der folgenden Beschreibung.

### Zeichnung

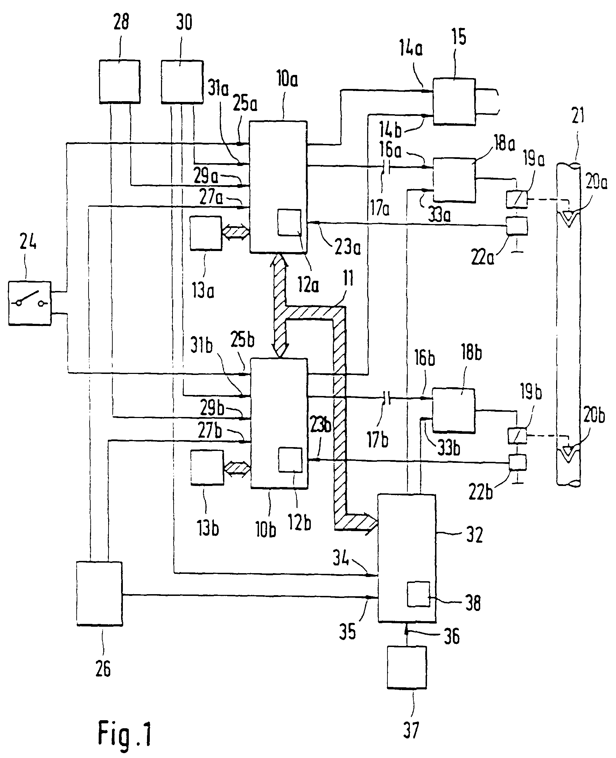

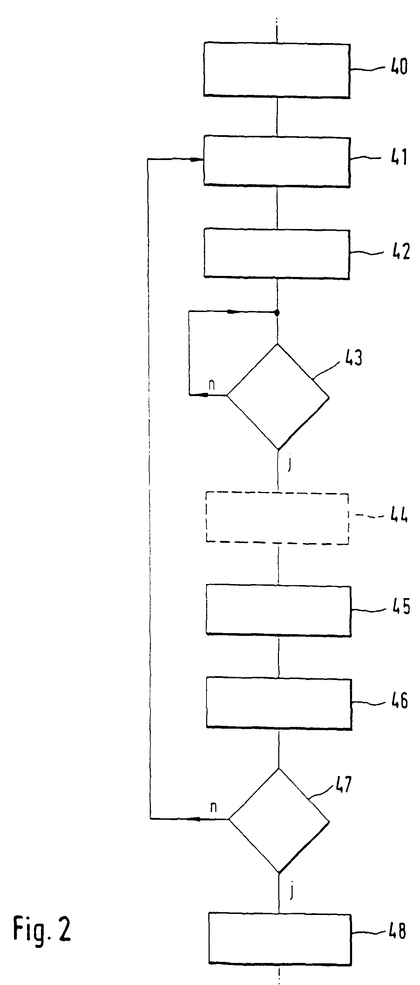

Figur 1 zeigt ein Blockschaltbild einer Vorrichtung, bei der das erfindungsgemäße Verfahren einsetzbar ist, und Figur 2 zeigt ein Flußdiagramm eines in der in Figur 1 gezeigten Vorrichtung ablaufenden Verfahrens.

Figur 1 zeigt einen ersten und zweiten Mikroprozessor 10a, 10b, die über einen Datenbus 11 miteinander verbunden sind. Der erste Mikroprozessor 10a arbeitet mit einem ersten Festwertspeicher 12a, im folgenden als erstes PROM bezeichnet, und mit einem ersten beschreibbaren und löschbaren Speicher 13a, im folgenden als EEPROM bezeichnet, zusammen. Der erste Mikroprozessor 10a gibt ein erstes Ausgangssignal 14a an eine Zündeinrichtung 15 sowie ein zweites Ausgangssignal 16a über einen ersten Kondensator 17a an eine erste Endstufe 18a ab.

Die erste Endstufe 18a bestromt eine erste Wicklung 19a eines ersten Magnetventils 20a, das in einer Leitung 21 angeordnet ist. Zur Erfassung des durch die erste Wicklung 19a fließenden Stroms ist ein erster Stromsensor 22a vorgesehen, der ein erstes Eingangssignal 23a an den ersten Mikroprozessor 10a abgibt.

Der erste Mikroprozessor 10a erhält ein von einem Schalter 24 abgegebenes zweites Eingangssignal 25a, ein von einer Flammenüberwachungseinrichtung 26 abgegebenes drittes Eingangssignal 27a, ein von einer Resetschaltung 28 abgegebenes viertes Eingangssignal 29 sowie ein von einem Grenztemperaturgeber 30 abgegebenes fünftes Eingangssignal 31a jeweils zugeführt.

Die Beschaltung des zweiten Mikroprozessors 10b entspricht vollständig der Beschaltung des ersten Mikroprozessors 10a.

Der zweite Mikroprozessor 10b gibt ein drittes Ausgangssignal 14b an die Zündeinrichtung 15 sowie ein viertes Ausgangssignal 16b über einen zweiten Kondensator 17b an eine zweite Endstufe 18b ab.

Die zweite Endstufe 18b bestromt eine zweite Wicklung 19b eines zweiten Magnetventils 20b, das in der Leitung 21 angeordnet ist. Zur Erfassung des durch die zweite Wicklung 19b fließenden Stroms ist ein zweiter Stromsensor 22b vorgesehen, der ein sechstes Eingangssignal 23b an den zweiten Mikroprozessor 10b abgibt.

Der zweite Mikroprozessor 10b erhält ein vom Schalter 24 abgegebenes siebtes Eingangssignal 25b, ein von der Flammenüberwachungseinrichtung 26 abgegebenes achtes Eingangssignal 27b, ein von der Resetschaltung 28 abgegebenes neuntes Eingangssignal 29 sowie ein vom Grenztemperaturgeber 30 abgegebenes zehntes Eingangssignal 31b jeweils zugeführt.

Der die beiden Mikroprozessoren 10a, 10b verbindende Datenbus 11 ist weiterhin zu einem dritten Mikroprozessor 32 geführt, der ein fünftes Ausgangssignal 33a an die erste Endstufe 18a und ein sechstes Ausgangssignal 33b an die zweite Endstufe 18b abgibt. Der dritte Mikroprozessor 33 wirkt mit einem dritten Festwertspeicher (PROM) 38 zusammen. Der dritte Mikroprozessor 32 erhält ein elftes Eingangssignal 34 zugeführt, das vom Grenztemperaturgeber 30 zur Verfügung gestellt wird. Ein zwölftes Eingangssignal 35 für den dritten Mikroprozessor 32 wird von der Flammenüberwachung 26 bereitgestellt. Ein letztes, dreizehntes Eingangssignal 36 gibt eine Eingabe 37 an den dritten Mikroprozessor 32 ab.

Das in Figur 1 gezeigte Ausführungsbeispiel ist auf ein zweikanaliges Sicherheitskonzept zum Überwachen wenigstens einer sicherheitsrelevanten Funktion eines Gerätes abgestellt. Wesentliche Teile des zweikanaligen Sicherheitskonzeptes bilden die beiden Mikroprozessoren 10a, 10b. Gegebenenfalls ist ohne weiteres eine Erweiterung auf ein mehrkanaliges Konzept mit weiteren Mikroprozessoren vorsehbar. Die Erweiterung auf weitere Sicherheitskanäle ist deshalb ohne weiteres möglich, da der Aufbau der einzelnen Kanäle weitgehend identisch ist. Welche Funktion oder welche Funktionen als sicherheitsrelevant zu betrachten sind, hängt von dem jeweiligen Anwendungsfall ab. Das in Figur 1 gezeigte Ausführungsbeispiel kann vorzugsweise bei einem brennstoffbeheizten Gerät eingesetzt werden. Der Brennstoff wird in der Leitung 21 einem nicht näher gezeigten Brenner zugeführt. Die Verriegelung oder die Freigabe eines Brennstoffzuflusses nehmen die beiden im Rohr 21 angeordneten, in Strömungsrichtung gesehen in Serie geschalteten Magnetventile 20a, 20b vor. Die Magnetventile 20a, 20b werden in Abhängigkeit von einem Stromfluß in den zugehörigen Wicklungen 19a, 19b betätigt. Eine erste sicherheitsrelevante Funktion ist der Betätigungszustand der Magnetventile 20a, 20b. Der Stromfluß in der ersten Wicklung 19a erfaßt der erste Stromsensor 22a, der das erste Eingangssignal 23a an den ersten Mikroprozessor 10a abgibt. Der Stromfluß in der zweiten Wicklung 19b erfaßt der zweite Stromsensor 22b, der das sechste Eingangssignal 23b an den zweiten Mikroprozessor 10b abgibt. Speziell abgestimmt auf die beispielhaft genannte Verwendung bei einem brennstoffbeheizten Gerät sind weiterhin der Grenztemperaturgeber 30 sowie die Flammenüberwachung 26, die jeweils ebenfalls als sicherheitsrelevante Funktionen zu betrachten sind. Unabhängig von der Anwendung wird die Reset-Schaltung 28 vorhanden sein, die beispielsweise eine Spannungsüberwachung für die elektrischen Komponenten enthält. Die Überwachung der Versorgungsspannung kann somit ebenfalls als ein Überwachen einer sicherheitsrelevanten Funktion angesehen werden. Zur Überwachung sicherheitsrelevanter Funktionen sind im wesentlichen die beiden Mikroprozessoren 10a, 10b vorgesehen, während der dritte Mikroprozessor 32 im wesentlichen Steuer- oder Regelaufgaben für das Gerät wahrnimmt. Der Programmablauf für den dritten Mikroprozessor 32 ist im PROM 38 enthalten, das entweder im dritten Mikroprozessor 32 enthalten oder als externer Baustein vorgesehen ist. Mit dem dreizehnten Eingangssignal 36, das die Eingabe 37 abgibt, kann beispielsweise eine gewünschte Solltemperatur vorgegeben werden, die das brennstoffbeheizte Gerät erreichen soll.

Der dritte Mikroprozessor 32 kann beispielsweise die beiden Endstufen 18a, 18b unmittelbar ansteuern. Das fünfte Ausgangssignal 33a steuert die erste Endstufe 18a und das sechste Ausgangssignal 33b steuert die zweite Endstufe 18b. In einer anderen Ausgestaltung kann vorgesehen sein, daß die beiden Endstufen 18a, 18b neben dem vom dritten Mikroprozessor 32 abgegebenen Ausgangssignalen 33a, 33b zusätzlich die von dem ersten und zweiten Mikroprozessor 10a, 10b abgegebenen Ausgangssignale 16a, 16b zum Bestromen jeweils der Wicklungen 19a, 19b benötigen. In einer bevorzugten Ausgestaltung ist vorgesehen, daß die beiden Endstufen 18a, 18b ausschließlich von den von den beiden Mikroprozessoren 10a, 10b jeweils abgegebenen Ausgangssignalen 16a, 16b allein betätigt werden.

Die Information über eine Wärmeanforderung kann der dritte Mikroprozessor 32 über den gemeinsamen Datenbus 11 den beiden anderen Mikroprozessoren 10a, 10b mitteilen, die daraufhin die entsprechenden Ausgangssignale 16a, 16b abgeben. Der erste und zweite Kondensator 17a, 17b sorgt für eine dynamische Ansteuerung der jeweiligen Endstufe 16a, 16b. Diese Maßnahme erhöht die Betriebssicherheit dadurch, daß ein Ausfall wenigstens eines der beiden Mikroprozessoren 10a, 10b abgefangen wird, bei dem eines oder beide Ausgangssignale 16a, 16b am entsprechenden Ausgang des Mikroprozessors 16a, 16b einen statischen Wert annehmen würde. Sofern die Magnetventile 20a, 20b eine kontinuierliche Durchflußverstellung ermöglichen, können die vom dritten Mikroprozessor 32 abgegebenen Ausgangssignale 33a, 33b und/oder die von den anderen beiden Mikroprozessoren 10a, 10b abgegebenen Ausgangssignale 16a, 16b eine Impulsbreitenmodulation aufweisen. Das impulsbreitenmodulierte Signal wird von den beiden Kondensatoren 17a, 17b ungehindert durchgelassen.

Das in Figur 1 gezeigte Ausführungsbeispiel ist darauf abgestellt, daß entweder der erste Mikroprozessor 10a oder der zweite Mikroprozessor 10b über die jeweiligen Ausgangssignale 14a, 14b die Zündeinrichtung 15 ansteuern können. Die Zündeinrichtung 15 weist beispielsweise Elektroden auf, zwischen denen ein Hochspannungsüberschlag stattfindet, der beispielsweise zerstäubtes Öl oder Gas entzündet. Das Auftreten einer Flamme wird von der Flammenüberwachung 26 detektiert. Das Ergebnis wird als drittes Eingangssignal 27a dem ersten Mikroprozessor 10a, als achtes Eingangssignal 27b dem zweiten Mikroprozessor 10b und gegebenenfalls als zwölftes Eingangssignal 35 dem dritten Mikroprozessor 32 zugeleitet. Eine Überprüfung auf Sicherheit findet vorzugsweise nur im ersten und zweiten Mikroprozessor 10a, 10b statt.

Eine andere Überprüfung der Sicherheit bezieht die vom Grenztemperaturgeber 30 abgegebenen Signale ein. Der erste Mikroprozessor 10a erhält das fünfte Eingangssignal 31a und der zweite Mikroprozessor 10b erhält das zehnte Eingangssignal 31b jeweils vom Grenztemperaturgeber 30 zugeleitet.

Die Signalverarbeitung im ersten Mikroprozessor 10a wird in Abhängigkeit von dem im ersten PROM 12a und die Signalverarbeitung im zweiten Mikroprozessor 10b wird von der im zweiten PROM 12b hinterlegten Programm jeweils gesteuert. Die beiden PROM 12a, 12b können jeweils im Mikroprozessor 10a, 10b enthalten sein oder sind als externe Bausteine vorhanden.

Besonders wesentlich ist es, daß jedem der beiden Mikroprozessoren 10a, 10b ein eigenes EEPROM 13a, 13b zugeordnet ist. Die EEPROMs 13a, 13b können ebenfalls jeweils im betreffenden Mikroprozessor 10a, 10b enthalten sein oder sind als separate Bausteine vorhanden. In den EEPROMs 13a, 13b können Betriebszustände des Gerätes, aufgetretene Fehler, Verriegelungsmarkierungen sowie Merksignale hinterlegt werden.

Die Ermittlung von Zuständen, von Fehlern oder von weiteren Signalen führen der erste und zweite Mikroprozessor 10a und 10b getrennt durch. Ein Datenaustausch zwischen den beiden Mikroprozessoren 10a, 10b ist über den Datenbus 11 vorgesehen. Es ist daher möglich, daß der eine Mikroprozessor 10a, 10b jeweils das dem anderen Mikroprozessor 10a, 10b zugeordnete EEPROM 13a, 13b auslesen kann.

Weiterhin kann vorgesehen sein, daß bei jeder erneuten Inbetriebnahme des Gerätes einem anderen Mikroprozessor 10a, 10b eine Masterfunktion zugeordnet wird und daß nur der Master einen für die Inbetriebnahme des Gerätes erforderlichen Vorgang auslösen kann. Im gezeigten Ausführungsbeispiel ist dieser Vorgang die Abgabe des ersten Ausgangssignals 14a vom ersten Mikroprozessor 10a oder die Abgabe des dritten Ausgangssignals 14b des zweiten Mikroprozessors 10b jeweils zum Betätigen der Zündeinrichtung 15. Derjenige Mikroprozessor 10a, 10b der nicht Master ist, arbeitet als Slave. Neben dem Wechsel der Berechtigung für die Inbetriebnahme des Gerätes kann die Masterfunktion bedeuten, daß der jeweilige Master die Datenübertragung über den Datenbus 11 kontrolliert.

Eine Inbetriebnahme des Gerätes wird beispielsweise vom dritten Mikroprozessor 32 als Folge einer Wärmeanforderung veranlaßt. Eine andere Möglichkeit geht von der Reset-Schaltung 28 aus, die nach einer Störung der Betriebsspannung, wobei kein weiterer Fehler aufgetreten ist, eine erneute Inbetriebnahme über die von der Reset-Schaltung 28 abgegebenen Signale 29a, 29b veranlaßt, die dem ersten Mikroprozessor 10a als viertes Eingangssignal 29a und dem zweiten Mikroprozessor 10b als neuntes Eingangssignal 29b zugeführt sind. Eine weitere Möglichkeit, eine erneute Inbetriebnahme vorzusehen, kann aus einem Programmablauf resultieren, der weiter unten näher erläutert ist. Die Festlegung, welcher der beiden Mikroprozessoren 10a, 10b als Master arbeiten soll, kann anhand eines Eintrags in einem oder in beiden EEPROMs 13a, 13b erfolgen. Ein solcher Eintrag ist ein Beispiel eines Merksignals.

Fehlerzustände, die die beiden Mikroprozessoren 10a, 10b getrennt ermitteln, ergeben sich beispielsweise aus Plausibilitätsbetrachtungen der Eingangssignale. Beispielsweise liegt ein Fehler vor, wenn ein Eingangssignal 23a, 23b das Vorliegen eines durch die Wicklung 19a, 19b fließenden Stroms signalisiert und die Zündeinrichtung 15 nicht betätigt wird. Ein anderes Beispiel für einen Fehler ist die Überwachung einer vorgegebenen Zeit, in der die Flammenüberwachung 26 ein Signal abgeben muß, nachdem die Zündeinrichtung 15 betätigt wurde. Abweichungen zwischen den beiden die Mikroprozessoren 10a, 10b enthaltenden Kanäle, beispielsweise dadurch, daß das erste Eingangssignal 23a einen vom ersten Stromsensor 22a erfaßten Strom meldet, während das sechste Eingangssignal 23b, das der zweite Stromsensor 22b abgibt, keinen Stromfluß meldet, sind ebenfalls Fehler.

Ein vorteilhaftes Verfahren, das bei einem erkannten Fehler in wenigstens einem der beiden Mikroprozessoren 10a, 10b ablaufen kann, wird anhand des in Figur 2 gezeigten Flußdiagramms näher erläutert. Nach einer Anforderung 40 zur Inbetriebnahme des Gerätes wird in einer Festlegung 41 die Masterfunktion entweder dem ersten Mikroprozessor 10a oder dem zweiten Mikroprozessor 10b zugewiesen. Die Anforderung 40 zur Inbetriebnahme des Gerätes ist im gezeigten Ausführungsbeispiel eine beispielsweise vom dritten Mikroprozessor 32 ausgelöste Wärmeanforderung. Nach der Inbetriebnahme 42, die im gezeigten Ausführungsbeispiel aus der von einem der beiden Mikroprozessoren 10a, 10b veranlaßten Betätigung der Zündeinrichtung 15 sowie aus dem Öffnen der beiden Magnetventile 20a, 20b besteht, wird in einer Abfrage 43 festgestellt, ob ein Fehler aufgetreten ist. Die Abfrage 43 findet sowohl im ersten Mikroprozessor 10a als auch im zweiten Mikroprozessor 10b statt. Die Abfragen 43 können sich zwischen beiden Mikroprozessoren 10a, 10b inhaltlich voneinander unterscheiden. Insbesondere tritt in jeden Fall ein zeitlicher Versatz auf, der durch die Festlegung von Master und Slave bedingt ist.

Ein festgestellter Fehler in der Abfrage 43 kann im nächsten Schritt eine Schnellabschaltung 44 auslösen. Im gezeigten Ausführungsbeispiel wird eine Schnellabschaltung 44 beispielsweise vorgenommen, wenn nach dem Betätigen der Zündeinrichtung 15 die Flammenüberwachung 26 kein entsprechendes Signal abgibt, welches das Vorhandensein einer Flamme anzeigt. Die Schnellabschaltung 44 wird beispielsweise dadurch vorgenommen, das zumindest ein, vorzugsweise beide Magnetventile 20a, 20b geschlossen werden. Eine andere Bedingung, die zum Auslösen der Schnellabschaltung führt, ist beispielsweise das Überschreiten einer vom Grenztemperaturgeber 30 vorgegebenen Grenztemperatur. Anstelle der Schnellabschaltung 44, die im Flußdiagramm strichliniert eingetragen ist, kann auch sofort zu einem Speichervorgang 45 gegangen werden. Das Überspringen der Schnellabschaltung 44 kann, wie bereits beschrieben, in Abhängigkeit vom aufgetretenen Fehler bestimmt sein. Im Speichervorgang 45 werden die vom ersten und vom zweiten Mikroprozessor 10a, 10b ermittelten Fehler in jeweils die zugehörigen EEPROMs 13a, 13b abgelegt. Gegebenenfalls werden aktuelle Betriebszustände ebenfalls in den EEPROMs 13a, 13b abgelegt. Zusätzlich kann eine Verriegelungsmarkierung eingetragen werden, die insbesondere vorgesehen ist, wenn die Schnellabschaltung 44 durchgeführt wurde.

Der Speichervorgang 45 wird gefolgt von einem Vergleich 46, bei dem die in den EEPROMs 13a, 13b abgelegten Inhalte miteinander vergleichen werden. Den Datenaustausch über den Datenbus 11 steuert vorzugsweise derjenige Mikroprozessor 10a, 10b, dem zur Zeit die Masterfunktion zugeordnet ist. Ebenso kann der jeweilige Master die Vergleichsoperationen durchführen. In einer weiteren Abfrage 47 wird ermittelt, ob die eingetragenen Inhalte übereinstimmen. Ein übereinstimmender Eintrag eines Fehlers führt in jedem Fall zu einer endgültigen Abschaltung 48 des Gerätes. Sofern das Gerät bereits in der Schnellabschaltung 44 stillgelegt wurde, kann spätestens jetzt in der endgültigen Abschaltung 48 jeweils ein Verriegelungsvermerk in den EEPROMs 13a, 13b bei dem ermittelten Fehler eingetragen werden. Nach der endgültigen Abschaltung 48 ist eine erneute Inbetriebnahme des Gerätes nur durch eine manuelle Betätigung des Schalters 24 möglich. Der Schalter 24 wird normalerweise von einem herbeigerufenen Servicetechniker betätigt, der zur Feststellung des aufgetretenen Fehlers die Möglichkeit hat, die Inhalte der EEPROMs 13a, 13b mit einer in Figur 1 nicht näher gezeigten Vorrichtung abzufragen. Beispielsweise besteht die Möglichkeit, die EEPROMs 13a, 13b über den Datenbus 11 abzufragen, der mit einer Diagnoseeinrichtung verbunden wird. Sofern die EEPROMs 13a, 13b separate Speicherbausteine sind, kann deren Inhalt unmittelbar an den Bausteinen selbst ausgelesen werden.

Tritt in der weiteren Abfrage 47 der Fall auf, daß nur in einem EEPROM 13a, 13b ein Fehler hinterlegt wurde, oder sind unterschiedliche Fehler in den beiden EEPROMs 13a, 13b eingetragen worden, dann kann mit einer gewissen Wahrscheinlichkeit davon ausgegangen werden, daß einer oder mehrere sporadische Fehler aufgetreten sind, die beispielsweise durch eine elektromagnetische Störung hervorgerufen wurden. Von der weiteren Abfrage 47 kann in diesem Fall unmittelbar zur Festlegung 41 gegangen werden, bei der die Zuordnung der Masterfunktion zu einem der beiden Mikroprozessoren 10a, 10b wechselt. Sofern die Schnellabschaltung 44 nicht zum Tragen gekommen ist, kann auch unmittelbar vor die Abfrage 43 gesprungen werden, wobei die Inbetriebnahme 42 entfällt. Vorzugsweise wird aber zunächst das Gerät außer Betrieb gesetzt und in der Inbetriebnahme 42 neu eingeschaltet, um definierte Anfangsbedingungen zu haben.

Anstelle der in Figur 2 gezeigten Programmfolge, die ein Abschalten des Gerätes erst nach Durchführung der Abfrage 43 oder gegebenenfalls nach Durchführung der weiteren Abfrage 47 vorsieht, kann der Vergleich 46 unabhängig vorgesehen sein. Beispielsweise kann der Inhalt der EEPROMs 13a, 13b zyklisch ausgelesen und verglichen werden, unabhängig davon, ob irgendein Eintrag erfolgte oder in den Mikroprozessoren 10a, 10b ein Fehler festgestellt wurde. Sollte dann in einem dem Vergleich 46 entsprechenden Vergleich beispielsweise ein Abweichen der Inhalte der beiden EEPROMs 13a, 13b festgestellt werden, kann zunächst eine Abschaltung und anschließend eine erneute Inbetriebnahme vorgesehen werden, um festzustellen, ob ein sporadisch aufgetretener Fehler, beispielsweise in einem der Mikroprozessoren 10a, 10b, aufgetreten ist.

## Patentansprüche

1. Vorrichtung zum Überwachen wenigstens einer sicherheitsrelevanten Funktion eines Geräts, mit zwei oder mehr Mikroprozessoren (10a, 10b), wobei jedem Mikroprozessor ein eigener Speicher (13a, 13b) zugeordnet ist, der vom jeweiligen Mikroprozessor beschreib- und löschbar ist, dadurch gekennzeichnet, daß die Mikroprozessoren (10a, 10b) über einen Datenbus (11) miteinander verbunden sind, daß der Speicher (13a, 13b) jeweils vom Mikroprozessor (10a, 10b) auslesbar ist, daß der Speicher (13a, 13b) als nicht flüchtiger Speicher (13a, 13b) ausgebildet ist, daß der Mikroprozessor (10a, 10b) festgestellte Fehler im Speicher (13a, 13b) hinterlegt, daß bei einem aufgetretenen Fehler eine Abschaltung (48) des Geräts vorgesehen ist und daß eine manuelle Betätigung eines Schalters (24) vorgesehen ist zur erneuten Inbetriebnahme des Geräts.

2. Vorrichtung nach Anspruch 1, dadurch gekennzeichnet, daß als Speicher (13a, 13b) EEPROM-Speicher vorgesehen sind.

3. Vorrichtung nach Anspruch 2, dadurch gekennzeichnet, daß in einem Vergleich (46) die Inhalte der EEPROM's (13a, 13b) verglichen werden und daß die Abschaltung (48) bei einer Übereinstimmung von eingetragenen Fehlern vorgenommen wird.

4. Vorrichtung nach Anspruch 1, dadurch gekennzeichnet, daß jeder Mikroprozessor (10a, 10b) eine separate Funktion (20a, 20b) steuert, wobei die Funktionen (20a, 20b) zur Inbetriebnahme oder zum Betreiben des Geräts eine UND-Bedingung erfüllen müssen.

5. Vorrichtung nach einem der vorhergehenden Ansprüche, gekennzeichnet durch die Verwendung bei einem brennstoffbeheizten Gerät.

6. Vorrichtung nach Anspruch 5, dadurch gekennzeichnet, daß jedem Mikroprozessor (10a, 10b) ein in einer Ölzuführung oder Gaszuführung angeordnetes Magnetventil (20a, 20b) zugeordnet ist.

7. Vorrichtung nach einem der Ansprüche 1 bis 4, gekennzeichnet durch die Verwendung in Steuergeräten, die vorzugsweise in einem Kraftfahrzeug eingebaut sind.

## Claims

1. Apparatus for monitoring at least one safety-relevant function of a device, having two or more microprocessors (10a, 10b), a dedicated memory (13a, 13b) being assigned to each microprocessor, which memory (13a, 13b) can be written to and erased by the respective microprocessor, characterized in that the microprocessors (10a, 10b) are connected to one another via a data bus (11), in that the memory (13a, 13b) can respectively be read from by the microprocessor (10a, 10b), in that the memory (13a, 13b) is designed as a non-volatile memory (13a, 13b), in that the microprocessor (10a, 10b) stores confirmed faults in the memory (13a, 13b), in that, when a fault occurs, it is envisaged that the device be switched off (48), and in that manual operation of a switch (24) is envisaged for starting up the device once again.

2. Apparatus according to Claim 1, characterized in that EEPROM memory is provided as the memory (13a, 13b).

3. Apparatus according to Claim 2, characterized in that the contents of the EEPROMs (13a, 13b) are compared in a comparison (46) and in that the disconnection (48) is carried out if the faults entered correspond.

4. Apparatus according to Claim 1, characterized in that each microprocessor (10a, 10b) controls a separate function (20a, 20b), the functions (20a, 20b) for starting up or for operating the device having to satisfy an AND condition.

5. Apparatus according to one of the preceding claims, characterized by use in a fuel-heated device.

6. Apparatus according to Claim 5, characterized in that each microprocessor (10a, 10b) is assigned a solenoid valve (20a, 20b) which is arranged in an oil supply or gas supply.

7. Apparatus according to one of Claims 1 to 4, characterized by use in controllers which are preferably installed in a motor vehicle.

## Revendications

1. Dispositif pour surveiller au moins une fonction relative à la sécurité d'un appareil, comprenant deux ou plusieurs microprocesseurs (10a, 10b), une mémoire propre (13a, 13b) étant associée à chaque microprocesseur, mémoire qui peut être programmée et effacée par le microprocesseur correspondant,
caractérisé en ce que
- les microprocesseurs (10a, 10b) sont reliés l'un à l'autre par un bus de données (11),
- la mémoire (13a, 13b) peut être respectivement lue par le microprocesseur (10a, 10b),
- la mémoire (13a, 13b) est constituée sous la forme d'une mémoire non volatile (13a, 13b),
- le microprocesseur (10a, 10b) consigne des défauts déterminés dans la mémoire (13a, 13b),
- dans le cas où il se produit un défaut il est prévu un débranchement (48) de l'appareil et
- un actionnement manuel d'un interrupteur (24) est prévu pour la remise en marche de l'appareil.

2. Dispositif selon la revendication 1,
caractérisé en ce que
l'on prévoit comme mémoire (13a, 13b) une mémoire EEPROM.

3. Dispositif selon la revendication 2,
caractérisé en ce que
- dans un appareil de comparaison (46) on compare les contenus des EEPROM (13a, 13b),et
- l'on procède au débranchement (48) de l'appareil quand il y a coïncidence entre les défauts enregistrés.

4. Dispositif selon la revendication 1,
caractérisé en ce que
chaque microprocesseur (10a, 10b) est commandé par une fonction séparée (20a, 20b), les fonctions (20a, 20b) devant remplir une condition ET pour la mise en route ou pour faire fonctionner l'appareil.

5. Dispositif selon l'une des revendications précédentes,
caractérisé par
son utilisation dans le cas d'un appareil chauffé par un combustible.

6. Dispositif selon la revendication 5,
caractérisé en ce que
l'on associe à chaque microprocesseur (10a, 10b) une électrovanne (20a, 20b), disposée dans une conduite d'amenée de fioul ou dans une conduite d'amenée de gaz.

7. Dispositif selon l'une des revendications 1 à 4,
caractérisé par
son utilisation dans des appareils de commande qui sont montés de préférence dans un véhicule à moteur.
